# EUROPEAN PATENT APPLICATION

(11) **EP 3 611 894 A1**
(43) Date of publication of application: **19.02.2020**
(21) Application number: 18306111.8
(22) Date of filing: 13.08.2018
(51) Int. Cl.: H04L 29/06

(54) **METHOD OF MANAGING THE CONNECTIVITY OF A SECURITY ELEMENT TO A CELLULAR TELECOMMUNICATIONS NETWORK**

(71) Applicant: Thales Dis France SA, 92190 Meudon (FR)
(72) Inventor: GROS, Jean-François, 13881 GEMENOS cedex (FR); PONARD, Sebastien, 13881 GEMENOS cedex (FR); DANY, Vincent, 13881 GEMENOS cedex (FR)
(74) Representative: Scheer, Luc

(57) **Abstract**

The invention concerns a method of managing the connectivity to a mobile telecommunications network of a SIM cooperating with an loT Device, this method consisting in modifying a parameter of the SIM to temporarily avoid it from connecting to the mobile telecommunications network during a certain period of time.

## Description

The present invention concerns IoT Devices and more precisely a method for managing radio connection of such IoT Devices with cellular telecommunications networks. An IoT Device comprises:
- An IoT Device Application which is the application software component of the IoT Device that controls the Communications Module and interacts with an IoT Service Platform via the Communications Module.
- A Communication Module which is the communications component that provides radio connectivity (2G, 3G, 4G or 5G). It comprises Communications Module Firmware, Radio Baseband Chipset and a UICC.
   ∘ Communications Module Firmware is the functionality within the Communications Module that provides an API to the IoT Device Application and controls the Radio Baseband Chipset.
   ∘ The Radio Baseband Chipset is the functionality within the Communications Module that provides connectivity to the mobile network.
   ∘ The UICC (Universal Integrated Circuit Card) is the secure element (which can be removable, embedded or integrated) used by a mobile network to authenticate devices for connection to the mobile network and access to network services. It includes the (U)SIM (Subscriber Identity Module) which is the Module provided by the Mobile Network Operator containing the International Mobile Subscriber Identity (IMSI) and the security parameters used to authenticate the (U)SIM with the Network. The SIM is seen as an authentication application contained in the UICC.

The IoT Device communicates with an IoT Server Application. The IoT Server Application is an application software component that runs on a server and can exchange data and interact with the IoT Devices and the IoT Device Applications over the IoT Service Platform. The loT Service Platform, hosted by the IoT Service Provider which communicates to an IoT Device to provide an IoT Service. The IoT Service Platform can exchange data with the IoT Device Application over the Mobile Network and through the Communication Module, using (among others), 2G, 3G, 4G, 5G connectivity including (among others) IP-based protocols over a packet-switched data channel. Finally, the IoT Service Platform typically offers APIs for IoT Server Applications to exchange data and interact with the IoT Device Applications over the IoT Service Platform.

The problem is that when the IoT Devices face a default of communication with its IoT Server Application (for example due to IoT Service Platform overload or default of communication service) the IoT Devices continue trying to communicate with the IoT Server Application. The predicted large scale growth of IoT Devices and their associated IoT Device Applications will then create major challenges for Mobile Network Operators. One major challenge that Mobile Network Operators must overcome is the risk caused by the mass deployment of inefficient, insecure or defective IoT Devices on the Mobile Network Operators' networks. When deployed on a mass scale such devices can cause network signalling traffic to increase to a level which impacts network services for all users of the mobile network. In the worst cases the mass deployment of such IoT Devices can disable a mobile network completely. An IoT Device overusing the network may lead to problems such as:
- Reducing the lifetime of the security element by increasing dramatically the read/write cycles.
- Increased power consumption of the IoT Device due to continuous restarts which may also affect the Device lifetime (when an IoT Device cannot connect to the server which is down through the cellular network, it reboots again and again).
- Local issues within the Mobile Network Operator's network such as cell congestion.
- Capacity and performance problems within the Mobile Network Operator's core network, such as signalling storms, which result in wide area network disruption.
- Negatively impacting the IoT service's performance, potentially resulting in delayed communications, degradation of the service quality and even service outages.

A real example is described in document GSMA TS.34_V4 annex A:
1. On a particular day, the customer's IoT Server Application suddenly and unexpectedly stopped acknowledging the status reports from the IoT Devices.
2. The IoT Devices treated this as a loss of connectivity over their Ethernet network connections and in an attempt to regain connectivity with the loT Server Application the IoT Devices all started to 'fall-back' to a GSM/GPRS network connection.
3. All the devices then switched on their GSM/GPRS communication modules and attempted to send status messages via their local GSM/GPRS network but again the acknowledge messages were not received from the IoT Server Application.
4. In this event the IoT Devices would reset the GSM/GPRS communication modules, forcing them to re-register to the local GSM/GPRS network and the IoT Devices would try again to contact the IoT Server Application. Eventually all IoT Devices ended up in an infinite loop with their GSM/GPRS modems being rebooted every minute or so.
5. As the number of IoT Devices which entered this 'reboot' loop grew, the signalling load within the core network of the IoT Devices home Mobile Network Operator grew to an unmanageable level. This resulted in one of home network's HLRs became overloaded with registration attempts, which in turn prevented all devices that use security elements provisioned in that HLR to register to any GSM network.

Therefore, too much signalling traffic can put at risk the MNO's network, since the IoT Devices have erratic behaviours.

This problem is solved by the present invention.

More precisely, the invention proposes a method of managing the connectivity to a mobile telecommunications network of a SIM cooperating with an IoT Device, the method consisting in modifying a parameter of the SIM to temporarily avoid it from connecting to the mobile telecommunications network during a certain period of time.

This parameter can be the MCC / MNC of the network to which the SIM connects.

This MCC / MNC is preferably set to 001/01.

Another solution is to set the MCC / MNC to a different Mobile Operator code than the Home Network.

Another solution is to modify the ACC file (Access Control Class) of the SIM, this parameter being set to 0 so that the priority of the SIM to connect to the network is nil. It is also possible to store the Home Network code in the FPLMN of the SIM so that the SIM no longer connects to its home network.

The method of the invention can be implemented by an applet installed in the security element or by the mobile telecommunications network.

The period of time can be random or defined within a time interval.

The invention also concerns a SIM for cooperating with an IoT Device, this SIM comprising an applet capable of triggering the suspension of the modification and / or modifying a parameter of the SIM to temporarily prohibit it to connect to a mobile telecommunications network. Finally, the invention also concerns an element of a mobile telecommunications network, this element comprising a unit able to trigger the suspension of the modification and / or to modify a parameter of a SIM cooperating with an IoT Device, in order to temporarily prohibit it from connecting to the mobile telecommunications network.

The present invention will be better understood by reading the following description of a preferred embodiment of the invention.

The invention proposes multiple steps to protect the Network
1. Detection of erratic behaviour of IoT Devices and trigger to "suspend" a IoT Device or a group of IoT Devices from attempting to connect, attach, authenticate to a network element (e.g. equivalent of HSS or GGSN)
2. Calculation of the period of time during which the IoT Device will be "suspending"
3. Suspension of the IoT Device to connect to the network
4. Re-establishment of the connection capability of the IoT Device

### 1: Detection and trigger

The invention proposes that the trigger to suspend the IoT Device can be automatic or self-decided in order to prevent risk of network overload. The automatic detection or IoT Device erratic behaviour can be done either from the network side of independently from the loT Device side.

From the network side network probes can be used on different signalling APIs to monitor the signalling traffic on different network elements (such as HSS or GGSN) and trigger a suspension request when programmable thresholds are hit.

From the IoT Device side an applet can monitor the attachment attend (example network attachment or PDP context activation) and trigger a suspension request when programmable thresholds are hit.

### 2: Calculation of the period of time during which the IoT Device will be suspended

The invention proposes that the IoT Device can be suspended permanently or temporally. If the loT Device has to be suspended temporally, the period of time can be calculated randomly between a minimum time and a maximum time either by a server or by the applet itself which will perform the suspension. The minimum and maximum time can be programmable. The period of time can be number of "get status" cycle.

### 3: Suspension of the IoT Device to connect to the network

The invention proposes to manage one or several SIM parameters managing the connectivity of the IoT Device with his home network. This home network is the network from which the owner of the IoT Device has bought a subscription.

When the trigger is received (as defined in step#1) the parameters are temporally changed during the period of time defined in step#3 detailed above.

The parameters can be changed either by a server (such an Over The Air / OTA platform) or by an applet integrated in the SIM.

Among others, the following parameters can be changed to suspend the connection of the IOT Device:
- Modify the IMSI, more precisely the MCC / MNC of the network (home network) to which the SIM connects. So, the network to which the SIM will try to connect is no more his home network, but a foreign network. This solution will surely overload the foreign network, but not the home network. In order not to overload the network of another MNO, it is possible to set the MCC / MNC to 001/01. This corresponds to a test network. The IoT Device will then no more try to connect to any network for a given period of of time.
- Modify the ACC file (Access Control Class) of the SIM, this parameter being set to 0 so that the priority of the security element to connect to said network is nil.
- Include the Home Network code in the FPLMN file of the SIM so that the SIM no longer connects to its home network.
- Set the "request file" to "enabled" status: If the request PIN is enabled the device will not try to attach because nobody is there to enter the PIN (it's an IoT Device)
- Other solutions are possible, the objective being that the security element does not try to connect to his home network for a given period of time, for example 1, 2 or 3 minutes.

After the modified parameters are modified, a SIM refresh may be performed in order for the loT Device to consider the new values of the modified parameters.

### 4: Re-establishment of the connection capability of the loT Device

The invention proposes that after the period of time is over an applet in the SIM switches back the modified parameters to their respective initial value.

After the modified parameters are switched back to their original value, a SIM refresh may be performed in order for the IoT Device to re-consider the new values of the modified parameters. The element of the network which manages remotely the SIM card (to trigger the suspension of the IOT Device or to change the SIM parameters) can either be a unit of an OTA platform sending commands through SMS (when the device is already attached to the network) or a proxy HLR which can send parameters through signalling messages during authentication flows (when the device is requesting to attach and is not attached yet).

The method of the invention can thus be implemented by an applet installed in the security element or by the mobile telecommunications network.

The invention also concerns a SIM for cooperating with an IoT Device, this SIM comprising an applet capable of triggering the suspension of the modification and / or modifying a parameter of the SIM to temporarily prohibit it to connect to a mobile telecommunications network. Finally, the invention concerns an element of a mobile telecommunications network, this element comprising a unit able to trigger the suspension of the modification and / or to modify a parameter of a SIM cooperating with an IoT Device, in order to temporarily prohibit it from connecting to the mobile telecommunications network.

The main advantage of the invention is that the loT Devices are forced not to generate signalling traffic even if the IoT Devices (including application and module) have bad designs or have been subject to fraud.

## Claims

1. A method of managing the connectivity to a mobile telecommunications network of a SIM cooperating with an IoT Device, said method consisting in modifying a parameter of said SIM to temporarily avoid it from connecting to said mobile telecommunications network during a certain period of time.

2. Method according to claim 1, **characterized in that** said parameter is the MCC / MNC of the network to which said SIM connects.

3. Method according to claim 2, **characterized in that** said MCC / MNC is set to 001/01.

4. Method according to claim 2, **characterized in that** said MCC / MNC is a different Mobile Operator code than the Home Network.

5. Method according to claim 1, **characterized in that** said parameter is the ACC file (Access Control Class) of said SIM, said parameter being set to 0 so that the priority of said SIM to connect to said network is nil.

6. Method according to claim 1, **characterized in that** the Home Network code is stored in the FPLMN of said SIM so that said SIM no longer connects to its home network.

7. Method according to one of claims 1 to 6, **characterized in that** it is implemented by an applet installed in said security element.

8. Method according to one of claims 1 to 6, **characterized in that** it is implemented by said mobile telecommunications network.

9. Method according to claim 1, **characterized in that** said period of time is random.

10. Method according to claim 9, **characterized in that** said random period of time is defined within a time interval.

11. SIM for cooperating with an IoT Device, **characterized in that** it comprises an applet capable of triggering the suspension of the modification and / or modifying a parameter of said SIM to temporarily prohibit it to connect to a mobile telecommunications network.

12. Element of a mobile telecommunications network, **characterized in that** it comprises a unit able to trigger the suspension of the modification and / or to modify a parameter of a SIM cooperating with an IoT Device, in order to temporarily prohibit it from connecting to said mobile telecommunications network.
